# EUROPEAN PATENT SPECIFICATION

(11) **EP 4 056 821 B1**
(45) Date of publication and mention of the grant of the patent: **14.05.2025**
(21) Application number: 22160199.0
(22) Date of filing: 04.03.2022
(51) Int. Cl.: F01N 3/20, F01N 3/28, F01N 3/10, F01N 3/021, F01N 3/022, F01N 3/035

(54) **POLLUTANTS ABATEMENT SYSTEM FOR SPONTANEOUS IGNITION ENGINES**
SYSTEM ZUR SCHADSTOFFVERMINDERUNG EINES SELBSTZÜNDENDEN MOTORS
SYSTÈME DE RÉDUCTION DE POLLUANTS POUR MOTEURS À ALLUMAGE SPONTANÉ

(30) Priority: 08.03.2021 IT 202100005366
(43) Date of publication of application: 14.09.2022
(73) Proprietor: FPT Industrial S.p.A., 10156 Torino (IT)
(72) Inventor: Pidria, Marco Federico, 10156 Torino (IT); MERLONE BORLA, Edoardo, 10156 Torino (IT)
(74) Representative: Fiume, Orazio

(56) References cited:
- EP-A1- 2 426 326
- WO-A1-2015/130211
- WO-A2-2010/004320
- US-A1- 2006 039 843
- US-A1- 2010 058 746

## Description

### Field of the invention

The present invention relates to the field of pollutant abatement devices and pollutant abatement system for compression ignition engines, i.e. with compression ignition, such as preferentially Diesel engines.

### State of the art

The regulations on the emissions of pollutants produced by motor vehicles into the atmosphere are gradually becoming more and more restrictive.

The term particulate matter (PM) identifies the set of solid or liquid particles suspended in the air.

The most recent regulations provide for the counting of the Particulate number (PN) in which solid particles fall in the range 500-23 nanometers and for the future it is expected to extend up to 10 nanometers.

The PN also includes solid particles potentially generated by the injection of Adblue and the incomplete decomposition of urea.

An exhaust gas after-treatment system (ATS) generally includes, starting from the internal combustion engine, a DOC (Diesel oxidation catalyst), a DPF (Diesel particulate filter), an SCR (Selective catalytic reduction) and a CUC (Clean-up Catalyst).

DOC is a catalytic converter designed specifically for diesel engines and equipment to reduce emissions of carbon monoxide (CO), hydrocarbons (HC) and particulate matter (PM).

The DPF is a closed filter that has the double task of accumulating particulate and burning it. The elimination of particulates occurs naturally with the help of NOx at temperatures above 350°C. When the accumulation of particulate matter exceeds a predetermined threshold, a forced regeneration procedure is started, which aims to raise the temperature of the DPF triggering a sudden combustion of the accumulated particulate.

The SCR is a catalyst whose walls are loaded with zeolites, which are able to convert NOx into N2 and H2O with the aid of the injection of a liquid ammonia precursor solution.

A so-called CUC is generally arranged downstream of the SCR, that is to say a catalyst whose walls are loaded with noble metals and zeolites to neutralize the ammonia excess that is released by the SCR. The CUC is referred to in several ways, for example "ammonia slip catalyst" (ASC) or "ammonia guard catalyst" (AGC).

EP3230563B1, EP2426326A1, US2010058746A1 and WO2010004320A2 describe examples of a pollutant abatement system for exhaust gases of Diesel engines.

The indicated solution is effective to eliminate the NH3 excess coming from the SCR, but it is believed that this solution is not optimal for eliminating the solid nano-particles generated by the injection of Adblue and its incomplete decomposition as these particles have sufficient inertia to pass through the CUC and contribute to the total particulate emissions regulated by anti-pollution regulations.

If not specifically excluded in the detailed description that follows, what is described in this chapter is to be considered as an integral part of the detailed description..

### Summary of the invention

The purpose of the present invention is to propose a pollutant abatement device configured to neutralize nano-particles including 10nm and 500nm generated by the incomplete decomposition of the urea-based agent injected upstream of an SCR.

The object of the present invention is to propose an exhaust gas after-treatment system for compression ignition engines according to the features of claim 1.

The bivalent device is arranged downstream of an exhaust gas post-treatment system which comprises in succession a DOC, a DPF, an SCR, a CUC and the aforementioned bivalent device.

In other words, the exhaust gas post-treatment system comprises two particulate filters but having different characteristics and functions.

In fact, while the first particulate filter is intended to collect carbonaceous particulate, the second is intended to collect solid nano-particles generated by the injection and the incomplete decomposition of the urea-based agent, which cannot be neutralized by a traditional CUC which has an open matrix.

In an alternative scheme, the aforementioned bivalent device can fully replace the traditional CUC downstream of the SCR as it is able to integrate the functionality of a traditional CUC that eliminates gaseous NH3 excess by decomposing it to molecular nitrogen and oxygen with the functionality of filtering and decomposing the solid nano-particles generated by the incomplete decomposition of the urea-based agent.

According to the invention, the filter matrix of the bivalent device can be made in a very different way compared to those intended to collect and oxidize the particulate, as it is intended to intercept nano-particles with a negligible mass and therefore with a low impact in terms of backpressure.

According to the invention, the matrix of the bivalent device can have porosity <45%, a pore diameter <9micron and a filtering surface between 0.2 and 1m² which defines a filtering capacity significantly higher than that of a traditional particulate filter, in order to maximize the filtration efficiency of nano-particles.

The combination of loading a closed filter as described with pores having a diameter strictly less than 9 microns determines a specific synergistic effect to reduce the pollutants generated by the SCR.

Even the catalytic coating can be realized in a different way compared to the traditional CUC.

According to a preferred variant of the present invention, the CUC-on-filter comprises a coating or coating in two consecutive areas or alternatively the noble metal-based coating is made in the inlet channels of the filter and the one based on zeolites in the exit channels.

This second variant of the bivalent device causes it to behave as three components arranged in series: CUC-filter-SCR. Well, there is absolutely no known a configuration in which the CUC is upstream of the SCR catalyst, much less a configuration in which the CUC precedes a particulate filter. In which the particulate subject to filtration is not a carbonaceous particulate, but formed by nano-particles caused by the typical reactions of the SCR.

The present invention finds particular application in Diesel cycle engines because SCR is widely used in exhaust gas after-treatment devices of Diesel cycle engines, nevertheless, the present invention could also be implemented in controlled ignition engines which provide for use of SCR and relative urea-based reducing agent doser.

The dependent claims describe preferred variants of the invention, forming an integral part of this description.

### Brief description of the figures

Further objects and advantages of the present invention will become clear from the following detailed description of an example of its embodiment (and its variants) and from the attached drawings given purely by way of non-limiting explanation, in which:
Figures 1 and 2 show conceptual diagrams of examples of the device object of the present invention;
Figures 2 and 3 show two examples of exhaust gas post-treatment systems comprising the device of Figures 1 or 2. The same reference numbers and letters in the figures identify the same elements or components or functions.

It should also be noted that the terms "first", "second", "third", "upper", "lower" and the like can be used here to distinguish various elements. These terms do not imply a spatial, sequential or hierarchical order for the modified elements unless specifically indicated or inferred from the text.

The elements and features illustrated in the various preferred embodiments, including the drawings, can be combined with each other without however departing from the scope of this application as described below.

### Detailed description of preferred embodiments

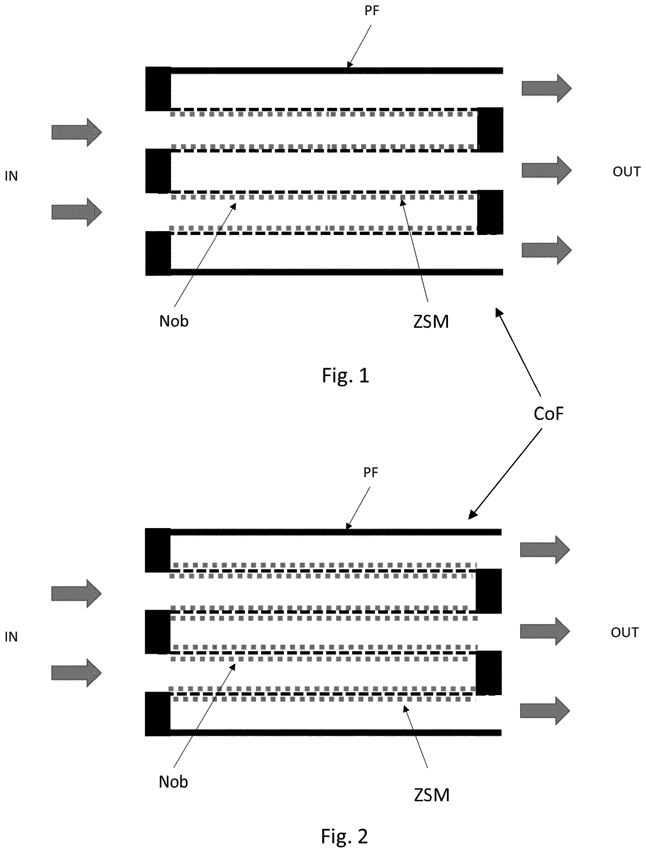

Figure 1 shows an example of a bivalent device or CUC-on-filter according to the present invention, indicated with the symbol "CoF".

It includes a ceramic filter matrix PF, deliberately indicated with a different symbol from the classic DPF, because as mentioned above, the filtering characteristics are very different compared to a filter intended to filter carbonaceous particles, as the pores are much smaller and the porosity is lower.

Like all closed filters, it includes closed channels with porous walls that allow communication between the input channels indicated by the arrows IN and the output channels indicated by the arrows OUT.

The concept of a closed filter is known per se and in contrast to the so-called open filters where there is a direct communication between the inlet and outlet openings of the same filter. The internal walls therefore have a face that faces into an inlet channel and a face, opposite to the first, that faces an outlet channel.

In other words, the walls inside the matrix represent septa that divide the input channels from the output channels. This general configuration is known and requires no further description. An example of a closed filter is in US2017122158.

Two loading procedures are performed on the matrix PF, one based on zeolites ZSM and the other based on noble metals Nob.

The first loading ZSM based on zeolites, in fact, corresponds to the creation of an SCR catalyst. While the second loading Nob based on noble metals corresponds to realizing a CUC.

According to a preferred variant of the invention, schematized in Figure 1, a first portion of the inlet channels of the ceramic matrix is loaded exclusively with noble metals for a predetermined length, for example 50% of the total, while the second and remaining length of the channels of the inlet channel is loaded with zeolite-based material.

The first portion of the inlet channels is first hit by the exhaust gases coming from the engine, while the second portion is hit after the first portion.

Preferably, the exhaust gases entering the CoF device first encounter the noble metal-based layer and then the zeolite-based layer.

In an alternative variant shown in Figure 2, the ceramic matrix is loaded, coated, with noble metals for the entire length of the inlet channels, while it is loaded, loaded, with zeolites for the entire length of the outlet channels. It is evident that it is possible to load only a portion of the input channels and/or only a portion of the output channels as described above instead of the entire length of the input and/or output channels.

The exhaust gas flow and the nano-particles particles first encounter the noble metal-based loading which, supported by the ceramic matrix, traps the nano-particles and thanks to the temperatures of the exhaust gases are decomposed to the gaseous state. The gases generated in this way can penetrate through the ceramic matrix and before being released into the atmosphere they meet the zeolite-based material which reduces any nitrogen oxides to molecular oxygen and nitrogen.

According to another preferred variant of the invention, the matrix is filled with both zeolites and noble metals based mixed together. In this case, any portion of the matrix is capable of
- Imprisoning the nano-particles derived from the injection of the urea-based reducing agent (Adblue^{®}),
- Decompose these particles
- Abate any residual NOx by means of NH3 and at the same time
- Promote the conversion of excess NH3 to N2.

Unlike what happens in EP3230563A1, ammonia does not follow a U-shaped path, that is, it does not cross the same C1 layer corresponding to a catalytic coating twice, but follows passing-through paths in walls of the filter matrix.

According to the present solution, the matrix of the CoF device is closed and therefore, the flow must necessarily pass through the walls of the filter, therefore, it meets the two loads, without however allowing the larger solid nano-particles to pass before being decomposed.

Therefore, the particles are collected and only after their decomposition in the gaseous phase can they cross the walls of the matrix and eventually be converted to molecular nitrogen and oxygen.

Unlike what happens in EP3230563A1, the ordering of the uploads is not essential.

As seen above, the active materials can be mixed with each other, or they can be arranged on different portions and/or different faces of the filter walls so that a coating is placed in the inlet channels and a coating in the outlet channels.

According to a preferred method of manufacturing the device, the following steps are carried out in succession:
- Die extrusion,
- Closing the channels,
- Loading with a liquid solution based on SCR precursors and calcination in the oven,
- Loading with liquid solution based on CUC precursor and calcination in the oven.

According to preferred variants of the invention, the aforementioned bivalent portion extends over the entire device.

According to preferred variants of the invention, the composition of the ceramic matrix can be Cordierite, Silicon Carbide or Aluminum Titanate extruded in a single monolith or in several segments which are subsequently assembled into a single monolith of the desired size.

The loading of the zeolite-based matrix can be carried out with a mixture exchanged with copper (copper exchange), iron or a mixture of the two or with a mixture of titanium dioxide, vanadium and tungsten.

The noble metal loading can contain Platinum and Palladium or a mixture of the two in variable proportions dispersed on a support with a high specific surface typically based on gamma-alumina.

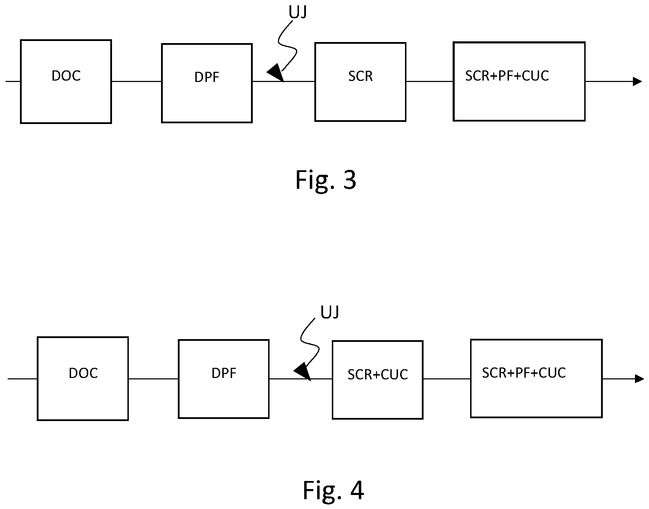

Figures 3 and 4 show preferred variants of ATS exhaust gas aftertreatment systems for a Diesel cycle internal combustion engine.

They have in common the following components arranged in succession according to the flow of exhaust gas leaving the internal combustion engine:
- DOC, Diesel oxidation catalyst,
- DPF, Diesel particulate filter,
- SCR, Selective catalytic reduction, with a relative doser UJ of urea based reducing agent, AdBlue^{®},
- an abatement device CoF.

The positioning of the doser upstream of the SCR and the possible presence of mixers that favor the hydrolysis of the urea-based reducing agent is known per se.

Figure 3 differs from Figure 4 only for the fact that in Figure 4 there is a CUC downstream of the SCR, for example integrated into the same SCR. In other words, the system comprises a total of two filters: a first filter, that is a classic DPF, and a second CoF filter downstream of the SCR capable of intercepting the nano-particles generated by the SCR itself.

The system, as conceived, turns out to be optimal, since the first DPF, according to the direction of circulation of the exhaust gas, not being loaded in any way like an SCR, is able to perform the so-called spontaneous or passive regeneration of the residue carbonaceous. While, the second filter, defined by the bivalent device CoF, has the purpose of trapping solid nano-particles deriving from the injection of urea-based reducing agent on the SCR, guaranteeing their entrapment and an optimal elimination of the latter which would fall within the calculation of the pollutants emitted globally by the propulsion system which includes internal combustion engine and device for post-treatment of exhaust gas ATS.

## Claims

1. Exhaust gas post-treatment system for Diesel cycle engines comprising in succession, according to a direction of circulation of an exhaust gas flow, the following components in succession:
- Diesel oxidation catalyst (DOC),
- Diesel particulate filter (DPF),
- Selective catalytic reduction (SCR) with a relative metering unit (UJ) of urea-based reducing agent (AdBlue^{®}),
- an abatement device (CoF),
the system being **characterized in that** the abatement device comprises a matrix ceramic defining a closed filter (PF) at least partially loaded with a first loading (ZMS) based on zeolites and a second loading (Nob) based on noble metals, wherein said ceramic matrix has a porosity <45%, a pore diameter <9 microns and a filtering surface between 0.2 and 1 m².

2. System according to claim 1, further comprising a Clean-up Catalyst (CUC) disposed between said SCR and said abatement device (CoF).

3. System according to claim 1 or 2, wherein said ceramic matrix is based on Cordierite or Silicon Carbide or Aluminum Titanate and is extruded into a single monolith or into several segments assembled in a single monolith.

4. System according to any one of the preceding claims, wherein said first loading is made by means of a mixture based on Copper and/or iron or with a mixture of Titanium dioxide, Vanadium and Tungsten.

5. System according to any one of the preceding claims, wherein said second loading is made by means of a mixture containing Platinum and/or Palladium dispersed on a support with a high specific surface based on gamma-alumina.

6. System according to any one of the preceding claims, wherein said matrix comprises inlet channels and outlet channels communicating with each other by means of porosity of intermediate walls defining the inlet channels and outlet channels by relative opposite faces and wherein said first loading and said second loading define coatings of contiguous portions of at least one of said opposite faces.

7. System according to any one of the preceding claims 1 - 5, wherein said matrix comprises inlet channels and outlet channels communicating with each other by means of porosity of intermediate walls defining the inlet channels and outlet channels by relative opposite faces and wherein said first loading and said second loading are made on said opposite faces of each wall.

8. System according to any one of claims 1 to 5, wherein said matrix comprises inlet channels and outlet channels communicating with each other by means of porosity of intermediate walls defining the inlet channels and outlet channels by relative opposite faces and wherein said the first loading is realized as a coating of the inlet channels and said second loading is realized as a coating of the outlet channels.

9. System according to any one of claims 1 to 5, wherein said matrix comprises inlet channels and outlet channels communicating with each other by means of porosity of intermediate walls defining the inlet channels and outlet channels by relative opposite faces and wherein said first and second loading are achieved by defining a single layer that covers at least said inlet channels.

## Patentansprüche

1. Abgasnachbehandlungssystem für Dieselmotoren, das in Abfolge entsprechend der Zirkulationsrichtung eines Abgasstroms die folgenden Komponenten umfasst:
- einen Dieseloxidationskatalysator (DOC),
- einen Dieselpartikelfilter (DPF),
- eine selektive katalytische Reduktion (SCR) mit einer relativen Dosiereinheit (UJ) eines harnstoffbasierten Reduktionsmittels (AdBlue^{®}),
- eine Reduktionsvorrichtung (CoF),
wobei das System **dadurch gekennzeichnet ist, dass** die Reduktionsvorrichtung eine Keramikmatrix umfasst, die einen geschlossenen Filter (PF) definiert, der zumindest teilweise mit einem ersten Füllstoff (ZNS) auf Zeolithbasis und einem zweiten Füllstoff (Nob) auf Edelmetallbasis befüllt ist, wobei die Keramikmatrix eine Porosität < 45 %, einen Porendurchmesser < 9 µm und eine Filteroberfläche zwischen 0,2 und 1 m² aufweist.

2. System nach Anspruch 1, ferner einen Reinigungskatalysator (CUC) umfassend, der zwischen dem SCR und der Reduktionsvorrichtung (CoF) angeordnet ist.

3. System nach Anspruch 1 oder 2, wobei die Keramikmatrix auf Cordierit, Siliziumkarbid oder Aluminiumtitanat basiert und zu einem einzigen Monolithen oder zu mehreren zu einem einzigen Monolithen zusammengesetzten Segmenten extrudiert werden kann.

4. System nach einem der vorhergehenden Ansprüche, wobei der erste Füllstoff aus einer Mischung auf Basis von Kupfer und/oder Eisen oder einer Mischung aus Titandioxid, Vanadium und Wolfram besteht.

5. System nach einem der vorhergehenden Ansprüche, wobei der zweite Füllstoff aus einer Mischung besteht, die Platin und/oder Palladium enthält, das auf einem Träger mit hoher spezifischer Oberfläche auf der Basis von Gamma-Aluminiumoxid dispergiert ist.

6. System nach einem der vorhergehenden Ansprüche, wobei die Matrix Einlasskanäle und Auslasskanäle umfasst, die dank der Porosität von Zwischenwänden, die die Einlass- und Auslasskanäle durch gegenüberliegende Flächen definieren, miteinander in Verbindung stehen, und wobei der erste Füllstoff und der zweite Füllstoff Beschichtungen von aneinandergrenzenden Teilen mindestens einer der gegenüberliegenden Flächen definieren.

7. System nach einem der vorhergehenden Ansprüche 1-5, wobei die Matrix Einlasskanäle und Auslasskanäle umfasst, die durch die Porosität von Zwischenwänden miteinander in Verbindung stehen, die die Einlasskanäle und die Auslasskanäle durch relativ gegenüberliegende Flächen definieren, und wobei der erste Füllstoff und der zweite Füllstoff auf den gegenüberliegenden Flächen jeder Wand angebracht sind.

8. System nach einem der Ansprüche 1 bis 5, wobei die Matrix Einlasskanäle und Auslasskanäle umfasst, die durch die Porosität von Zwischenwänden, die die Einlasskanäle und die Auslasskanäle durch jeweils gegenüberliegende Flächen definieren, miteinander in Verbindung stehen, und wobei der erste Füllstoff in Form einer Beschichtung der Einlasskanäle und der zweite Füllstoff in Form einer Beschichtung der Auslasskanäle hergestellt wird.

9. System nach einem der Ansprüche 1 bis 5, wobei die Matrix Einlasskanäle und Auslasskanäle umfasst, die durch die Porosität von Zwischenwänden miteinander in Verbindung stehen, die die Einlasskanäle und die Auslasskanäle durch jeweils gegenüberliegende Flächen definieren, und wobei der erste und der zweite Füllstoff durch die Definition einer einzigen Schicht erhalten werden, die zumindest die Einlasskanäle bedeckt.

## Revendications

1. Système de post-traitement des gaz d'échappement pour moteurs à cycle diesel comprenant en séquence, selon un sens de circulation d'un flux de gaz d'échappement, les composants suivants en séquence :
- un catalyseur d'oxydation diesel (DOC),
- un filtre à particules diesel (DPF),
- une réduction catalytique sélective (SCR) avec une unité de dosage relative (UJ) d'un agent réducteur à base d'urée (AdBlue^{®}),
- un dispositif de réduction (CoF) selon,
le système étant **caractérisé en ce que** le dispositif de réduction comprend une matrice céramique qui définit un filtre fermé (PF) au moins en partie chargé avec une première charge (ZNS) à base de zéolithes et une deuxième charge (Nob) à base de métaux nobles, dans lequel ladite matrice céramique a une porosité < 45%, un diamètre des pores < 9 µm, et une surface de filtration entre 0,2 et 1 m².

2. Système selon la revendication 1, comprenant en outre un catalyseur de nettoyage (CUC) disposé entre ledit SCR et ledit dispositif de réduction (CoF).

3. Système selon la revendication 1 ou 2, dans lequel ladite matrice céramique est à base de cordiérite, de carbure de silicium ou de titanate d'aluminium et peut être extrudée en un seul monolithe ou en plusieurs segments assemblés en un seul monolithe.

4. Système selon l'une quelconque des revendications précédentes, dans lequel ladite première charge est constituée d'un mélange à base de cuivre et/ou de fer ou d'un mélange de dioxyde de titane, de vanadium et de tungstène.

5. Système selon l'une quelconque des revendications précédentes, dans lequel ladite deuxième charge est constituée d'un mélange contenant du platine et/ou du palladium dispersé sur un support à haute surface spécifique à base d'alumine gamma.

6. Système selon l'une quelconque des revendications précédentes, dans lequel ladite matrice comprend des canaux d'entrée et des canaux de sortie communiquant entre eux grâce à la porosité de parois intermédiaires définissant les canaux d'entrée et de sortie par des faces opposées, et dans lequel ladite première charge et ladite deuxième charge définissent des revêtements de parties contiguës d'au moins une desdites faces opposées.

7. Système selon l'une quelconque des revendications précédentes 1-5, dans lequel ladite matrice comprend des canaux d'entrée et des canaux de sortie communiquant entre eux au moyen de la porosité de parois intermédiaires définissant les canaux d'entrée et les canaux de sortie par des faces opposées relatives et dans lequel ladite première charge et ladite deuxième charge sont réalisés sur lesdites faces opposées de chaque paroi.

8. Système selon l'une quelconque des revendications 1 à 5, dans lequel ladite matrice comprend des canaux d'entrée et des canaux de sortie communiquant entre eux par la porosité de parois intermédiaires définissant les canaux d'entrée et les canaux de sortie par des faces opposées respectives, et dans lequel ladite première charge est réalisée sous forme de revêtement des canaux d'entrée et ladite deuxième charge est réalisée sous forme de revêtement des canaux de sortie.

9. Système selon l'une quelconque des revendications 1 à 5, dans lequel ladite matrice comprend des canaux d'entrée et des canaux de sortie communiquant entre eux par la porosité de parois intermédiaires définissant les canaux d'entrée et les canaux de sortie par des faces opposées respectives, et dans lequel lesdites première et deuxième charges sont obtenues en définissant une seule couche recouvrant au moins lesdits canaux d'entrée.
